# EUROPEAN PATENT APPLICATION

(11) **EP 1 674 208 A1**
(43) Date of publication of application: **28.06.2006**
(21) Application number: 04030827.2
(22) Date of filing: 27.12.2004
(51) Int. Cl.: B25D 17/00

(54) **Connector apparatus of electric tool for both reciprocating motion and rotary motion**

(71) Applicant: Jiangsu Golden Harbour Enterprise Ltd., Haian, Jiangsu (CN)
(72) Inventor: Wang, Shu, Nanjing, Jiangsu (CN)
(74) Representative: Becker Kurig Straus

(57) **Abstract**

A connector apparatus, which is installed to an electric tool, has a connector base (10) with a neck portion (12) at an end hereof. The neck portion has a gap (15) and an annular teethed block (18). The neck portion has a first portion and a second portion at a bottom of the gap, and a distance between the first portion and a distal end of the neck portion is less than a distance between the second portion and the distal end of the neck portion. A spindle (20) is provided with a positioning device having a positioning portion and a teethed disk (27). The spindle is inserted into the neck portion with the positioning portion received in the gap. A tube assembly, which has a lock block therein, is fitted to the neck portion, wherein the lock block is located beside the positioning device, and a holder is mounted to the spindle.

## Description

### BACKGROUND OF THE INVENTION

### 1. Field of the Invention

The present invention relates generally to an electric tool, and more particularly to a connector apparatus of an electric tool, which moves in both motions of reciprocation and rotation.

### 2. Description of the Related Art

Conventional hand-held electric tools are classified into the rotary tool, such as the electric drill, and the punch tool. The rotary tool has a rotary output and the punch tool has a reciprocating output. Because the motions of the tools are different, the elements of the tools are different also. It means that the rotary tool cannot provide a reciprocation output and the punch tool cannot provide a rotation output. User has to buy both of tools to meet the requirements of the tasks.

### SUMMARY OF THE INVENTION

The primary objective of the present invention is to provide a connector apparatus of an electric tool, which provides both motions of reciprocation and rotation.

According to the objective of the present invention, a connector apparatus, which is installed to a hand-held electric tool and driven by a motor of the electric tool, comprises a connector base having a slot at an end thereof, a neck portion, which is a hollow tube, at an opposite end thereof and a hole communicating the neck portion with the slot. The neck portion has a gap and an annular teethed block on a bottom thereof. The neck portion has a first portion and a second portion at a bottom of the gap, and a distance between the first portion and a distal end of the neck portion is less than a distance between the second portion and the distal end of the neck portion. A spindle has a body portion, at opposite ends of which a connecting portion and a threaded portion are provided. A bearing and a positioning device having a positioning portion are fitted to the connecting portion of the spindle. A spring and a teethed disk are fitted to the spindle, and the spring has opposite ends urging the positioning device and the teethed disk respectively. The connecting portion of the spindle is inserted into the neck portion of the connector base, and the positioning portion of the positioning device is received in the gap of the neck portion. A spring is fitted to the neck portion of the connector base. A tube assembly, which has a lock block therein, is fitted to the neck portion of the connector base, wherein the lock block is located beside the positioning device, and a holder is mounted to the threaded portion of the spindle.

### BRIEF DESCRIPTION OF THE DRAWINGS

FIG. 1 is an exploded view of a preferred embodiment of the present invention;

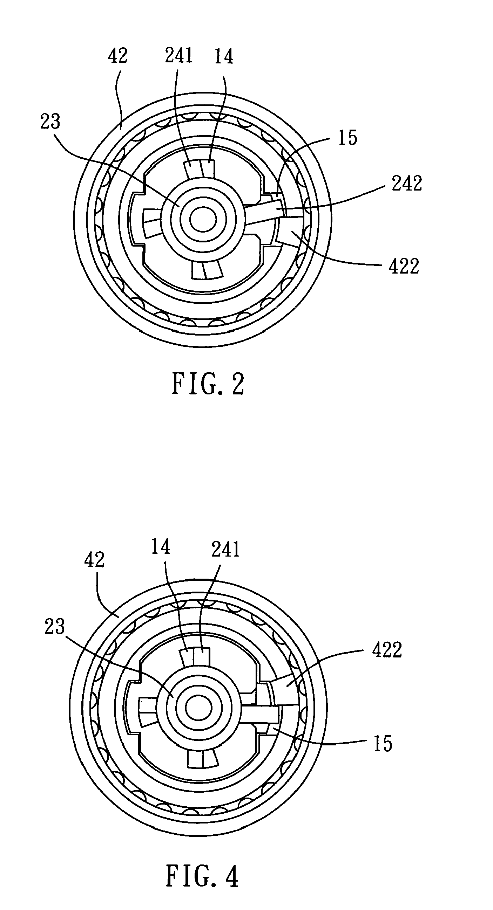

FIG. 2 is a sectional view of the connector base of the preferred embodiment of the present invention, showing the positioning device switched to the first portion;
FIG. 3 is a sectional view of the preferred embodiment of the present invention in combination;

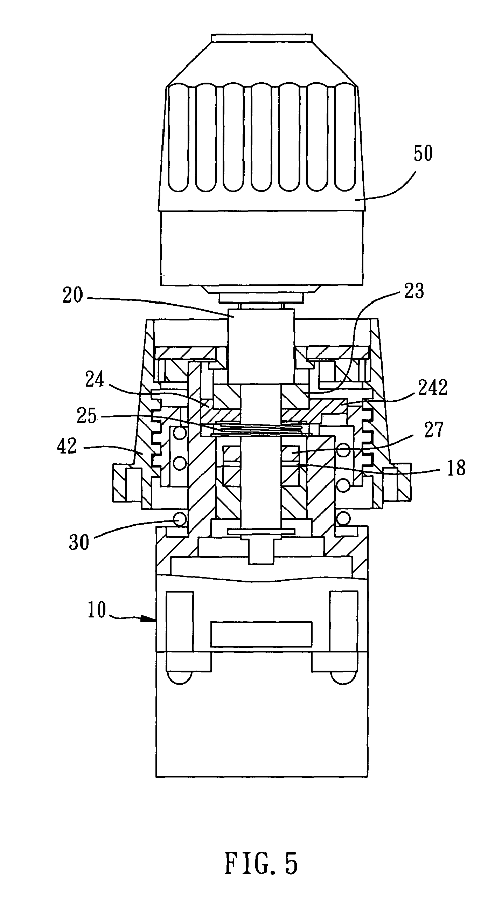

FIG. 4 is a sectional view similar to FIG. 2, showing the positioning device switched to the second portion, and
FIG. 5 is a sectional view of the preferred embodiment of the present invention, showing it rotating and reciprocating simultaneously.

### DETAILED DESCRIPTION OF THE INVENTION

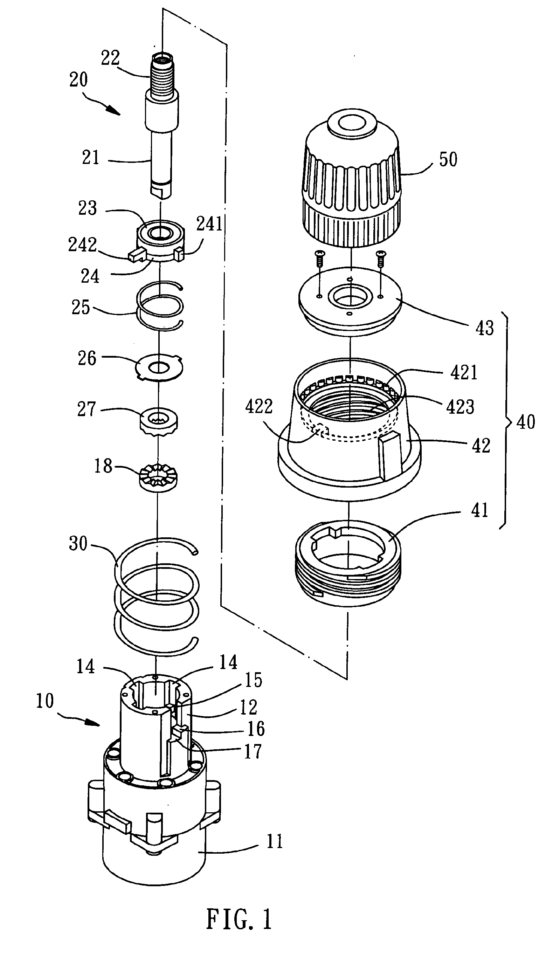

As shown in FIG. 1, a connector apparatus of the preferred embodiment of the present invention is installed to a conventional hand-held electric tool to be driven by a motor of the electric tool. The connector apparatus comprises

A connector base 10, which is an elongated barrel, has a slot 11 at an end thereof to be connected to an axle of the motor of the electric tool and a neck portion 12 projecting from an opposite end thereof. The connector base 10 has a hole 13 communicating the neck portion 12 and the slot 11, three axial recesses 13 on a sidewall of the hole 13 and a gap 15. The neck portion 12 has a first portion 16 and a second portion 17 respectively at bottoms of the recesses 13 and the gap 15, wherein a distance between a distal end of the neck portion 12 and the first portion 16 is less than a distance between the distal end of the neck portion 12 and the second portion 17. A teethed block 18 is received in a bottom of the hole 13 of the neck 12, which has an annular teeth portion at a top thereof.

A spindle 20 has a body portion with a greater diameter, a connecting portion 21 at an end of the body portion and a threaded portion at an opposite end of the body portion. A bearing 23 is fitted to the connecting portion 21 of the spindle 20 and a positioning device 24 is fitted to the connecting portion 21 as well next to the bearing 23. The positioning device 24 has three protrusions 241 and a positioning portion 242 at an outer surface thereof, wherein a height of the positioning position 242 I greater than that of the protrusions 241. The spindle 20 further is fitted with a spring 25, a washer 26 and a teethed disk 27, wherein the spring 25 has opposite ends urging the positioning device 24 and the washer 26 respectively. The connecting portion 21 of the spindle 20 is inserted into the hole 13 of the neck portion 12 of the connector base 10 with the protrusions 241 engaged with the recesses 14 respectively and the positioning device 242 received in the gap 15.

A spring 30 is fitted to the neck portion 12 of the connector base 10.

A tube assembly 40 has an interior tube 41, an exterior tube 42 and a lid 43 with an aperture. The exterior tube 42 has a flange 421 on an interior side thereof and a lock block 422 on the flange 421. The interior tube 41 has a thread on an exterior side thereof to be screwed to connect the exterior tube 42. The tube assembly 40 is fitted to the neck portion 12 of the connector base 10 and the lid 43 is screwed to be coupled with neck portion 12, so that the tubes 41 and 42 are restricted between the lid 43 and the connector base 10, and the lock block 422 of the exterior tube 42 is located beside the positioning device 242.

A holder 50 is coupled with the threaded portion 22 of the spindle 20 and has a hole to fix a drill or an axle of a bolt.

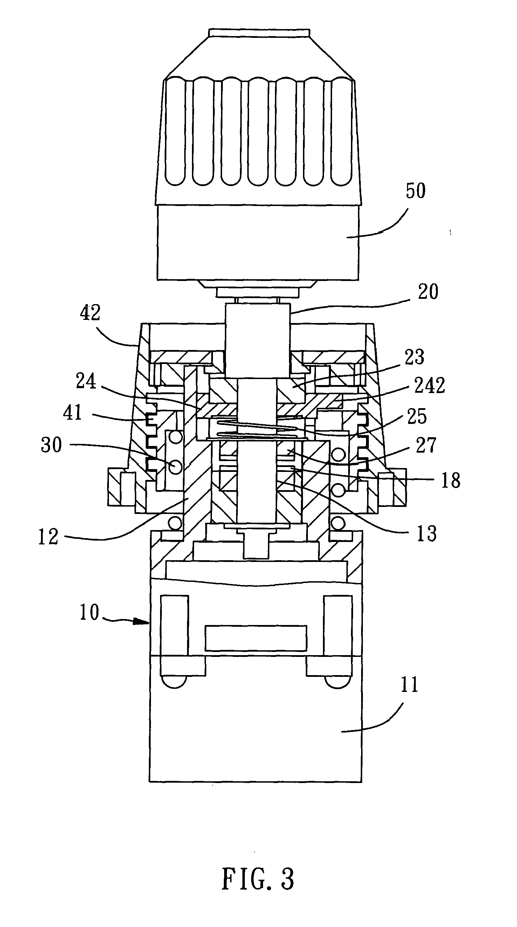

In operation, as shown in FIG. 3, the connector apparatus of the present invention moves only for the rotary motion while the exterior tube 42 is turned to drive the lock block 422 pushing the positioning portion 242 of the positioning device 24 of the spindle 20 to a position above the first portion 16 of the gap 15. In the meantime, while the operator presses the drill of the electric tool on an object, the spindle 20 is compressed backwardly, and the protrusions 241 are moved along the recesses 14, and the positioning portion 242 of the positioning device 24 is moved to the first portion 16 respectively to compress the spring 30.

Because the protrusions 241 and the positioning portion 242 press the first portion 16, the teethed disk 27 is not meshed with the teethed block 18 in the neck portion 12 of the connector base 10, so that the spindle 20 only rotates in this situation.

While the exterior tube 42 is turned again to drive the lock block 422 pushing the positioning portion 242 of the positioning device 24 of the spindle 20 to a position above the second portion 17 of the gap 15. While the spindle 20 is pressed backwardly, the protrusions 241 are moved along the recesses 14 still, and the positioning portion 242 of the positioning device 24 is moved to the second portion 17, the teethed disk 27 can be meshed with the teethed block 18, so that the teeth of the teethed disk 27 cross the teeth of the teethed block 18 while the spindle 20 rotates. As a result, the spindle 20 moves for both rotary motion and reciprocating motion simultaneously.

## Claims

1. A connector apparatus, which is installed to a hand-held electric tool and driven by a motor of the electric tool, comprising:
a connector base having a slot at an end thereof, a neck portion, which is a hollow tube, at an opposite end thereof and a hole communicating the neck portion with the slot, wherein the neck portion has a gap and an annular teethed block on a bottom thereof, wherein the neck portion has a first portion and a second portion at a bottom of the gap, and a distance between the first portion and a distal end of the neck portion is less than a distance between the second portion and the distal end of the neck portion;
a spindle having a body portion, at opposite ends of which a connecting portion and a threaded portion are provided; a bearing and a positioning device fitted to the connecting portion of the spindle, and the positioning device beside the bearing and having a positioning portion; a spring and a teethed disk fitted to the spindle, and the spring having opposite ends urging the positioning device and the teethed disk respectively; the connecting portion of the spindle inserted into the neck portion of the connector base, and the positioning portion of the positioning device received in the gap of the neck portion;
a spring fitted to the neck portion of the connector base;
a tube assembly, which has a lock block therein, fitted to the neck portion of the connector base, wherein the lock block is located beside the positioning portion of the positioning device, and
a holder mounted to the threaded portion of the spindle.

2. The connector apparatus as defined in claim 1, wherein the neck portion has three recesses on an interior side thereof, at bottoms of which a first portion and a second portion are provided respectively, and a distance between the first portion and the distal end of the neck portion is less than a distance between the second portion and the distal end of the neck portion.

3. The connector apparatus as defined in claim 2, wherein the positioning device has three protrusions received in the recesses on the neck portion of the connector base respectively.

4. The connector apparatus as defined in claim 1, further comprising a washer between the spring of the spindle and the teethed disk, wherein the spring urges the positioning device and the washer respectively.

5. The connector apparatus as defined in claim 1, wherein the tube assembly has an interior tube, an exterior tube and a lid with an aperture, wherein the exterior tube has a flange at an interior side thereof, and the lock block is provided on the flange, and the interior tube has a thread to be screwed to be engaged with a thread on the interior side of exterior tube below the flange.

6. The connector apparatus as defined in claim 1, wherein the tube assembly is fitted to the neck portion of the connector base, and the lid is screwed to be coupled with the neck portion to restrict the tubes between the lid and the connector base, and the lock block in the exterior tube is located beside the positioning portion of the positioning device.
